# FASCICULE DE BREVET EUROPEEN

(11) **EP 1 427 655 B1**
(45) Date de publication et mention de la délivrance du brevet: **18.01.2006**
(21) Numéro de dépôt: 01972148.9
(22) Date de dépôt: 12.09.2001
(51) Int. Cl.: B65G 47/53

(54) **DISPOSITIF DE TRANSFERT POUR CONVOYEUR LINEAIRE**
ÜBERGABEVORRICHTUNG FÜR EINEN LINEARFÖRDERER
TRANSFER DEVICE FOR LINEAR CONVEYOR

(43) Date de publication de la demande: 16.06.2004
(73) Titulaire: Solystic, 94257 Gentilly Cedex (FR)
(72) Inventeur: BADIER, Frédéric, F-07130 Saint Péray (FR); VIGO, Franck, F-26000 Valence (FR); BUFFAT, Laurent, F-26100 Romans (FR)
(74) Mandataire: Prugneau, Philippe
(86) Numéro de dépôt international: PCT/FR2001/002829
(87) Numéro de publication internationale: WO 2003/022715

(56) Documents cités:
- EP-A- 0 300 122
- DE-A- 1 953 270
- DE-U- 9 403 889
- US-A- 3 051 289
- PATENT ABSTRACTS OF JAPAN vol. 010, no. 315 (M-529), 25 octobre 1986 (1986-10-25) & JP 61 124424 A (CANON INC;OTHERS: 01), 12 juin 1986 (1986-06-12)

## Description

L'invention concerne un dispositif de transfert pour convoyeur linéaire et plus particulièrement pour un convoyeur de bacs à courrier utilisés dans une machine de tri postal.

Du document de brevet français n°2772734, on connaît un dispositif de transfert pour convoyeur linéaire de colis divers, comprenant des leviers coudés pendulaires aptes à exercer sélectivement sur les colis placés sur le convoyeur un effort de poussée pour déplacer ces colis jusqu'à un bâti fixe, la direction de poussée étant une direction sensiblement perpendiculaire à la direction de convoyage des colis. Ce bâti est disposé entre le convoyeur linéaire de colis et un autre convoyeur de toute nature permettant d'évacuer les colis au fur et à mesure de leur arrivée sur cet emplacement. Un colis déjà présent sur le bâti est évacué du bâti vers le convoyeur d'évacuation par la poussée d'un autre colis placé sur le convoyeur, cet autre colis étant lui-même poussé vers le bâti par un levier coudé pendulaire du dispositif de transfert.

Un levier pendulaire n'est pas adapté au transfert de bacs à courrier car l'effort d'appui qu'il peut exercer sur un bac à courrier vide posé sur le convoyeur linéaire est un effort ponctuel qui risque de déformer le bac, surtout lorsque ce bac vide pousse par réaction un bac présent sur le bâti et qui est rempli de plis de courrier. De plus le contact entre le levier pendulaire et le bac de courrier étant limité, il peut se produire une réaction verticale entre la poussée du bac plein par le bac vide si les faces des bacs ne sont pas parallèles (par exemple si elles sont inclinées) ou si elles présentent des nervures. Dans une utilisation d'un convoyeur linéaire tel que connu de ce document, au sein d'une machine de tri postal, l'emplacement du bâti correspond à une sortie de tri où des plis sont déversés dans un bac à courrier. Il peut être nécessaire de poser sous ces sorties de tri des bacs non pas à plat mais en position inclinée pour éviter des pertes de plis et pour obtenir un meilleur rangement des plis dans les bacs. Or l'agencement du dispositif de transfert connu de ce document ne permet pas d'amener un bac vide dans une position inclinée sur le bâti. On connaît aussi d'après le document de brevef US 3 051 289 A, un dispositif de transfert selon le préambule de la revendication 1.

C'est à ces inconvénients qu'entend plus particulièrement remédier l'invention en proposant un dispositif de transfert apte à extraire un bac vide d'un convoyeur linéaire et à le déplacer à plat jusqu'à un emplacement de chargement correspondant à une sortie de tri où il est repose en étant incliné en même temps qu'un bac plein reposant sur cet emplacement en étant incliné est extrait et déplacé à plat vers un convoyeur d'évacuation.

A cet effet, l'invention porte sur un dispositif de transfert pour convoyeur linéaire tel que defini par la revendication 1. Avec un tel dispositif de transfert, un bac à courrier vide posé sur le convoyeur linéaire est soulevé par la structure transporteuse au-dessus du convoyeur linéaire pour être déplacé selon la direction de transfert tandis qu'un bac à courrier plein posé sur la structure transporteuse au niveau du bâti est évacué sans être poussé par le bac vide. Il en résulte que ni le bac vide, ni le bac plein, ne subissent de déformation pendant leur transfert.

Pour obtenir qu'un objet extrait du convoyeur linéaire soit mis en position inclinée sur le bâti après son transfert depuis le convoyeur linéaire, il est prévu dans le dispositif de transfert selon l'invention que le bâti forme deux bordures horizontales sensiblement parallèles à la direction de transfert sur le côté du convoyeur entre lesquelles monte et descend la structure transporteuse. La structure transporteuse est disposée en dessous des deux bordures lorsqu'elle occupe sa position escamotée et au-dessus des deux bordures lorsqu'elle occupe sa position de transfert et les deux bordures sont décalées selon la direction verticale. De la sorte un objet placé sur la structure transporteuse peut reposer sur les deux bordures en étant incliné lorsque la structure transporteuse occupe sa position escamotée.

Pour obtenir un positionnement précis sur le bâti d'un objet incliné, il est prévu que le bâti comporte une butée disposée à une extrémité d'une bordure. En outre, un levier oscillant est prévu pour exercer sur un objet posé sur la structure transporteuse un effort de poussée en direction de cette butée quand la structure transporteuse est déplacée de sa position de transfert vers sa position escamotée.

Le dispositif de transfert selon l'invention est particulièrement adapté à un convoyeur linéaire ayant deux bandes parallèles motorisées. La structure transporteuse dans ce cas peut comporter une ou plusieurs bandes motorisées servant au transfert des objets selon la direction de transfert. La ou les bandes motorisées de la structure transporteuse sont guidées pour former un plan de transport sensiblement horizontal en deux parties, l'une des deux parties s'étendant entre les deux bandes du convoyeur linéaire et l'autre partie s'étendant sur le côté du convoyeur linéaire.

Plusieurs dispositifs de transfert selon l'invention peuvent être disposés les uns à la suite des autres le long d'un convoyeur linéaire en croisant celui-ci à angle droit ou avec un angle différent. De même plusieurs convoyeurs linéaires équipés chacun de plusieurs dispositifs de transfert peuvent être superposés pour effectuer une manipulation automatique des bacs à courrier dans une machine de tri postal à plusieurs niveaux de sorties de tri.

Les caractéristiques et avantages du dispositif de transfert selon l'invention apparaîtront encore mieux à la lecture de la description qui suit d'un exemple de réalisation illustré sur les dessins.

La figure 1 montre schématiquement selon une vue de dessus en perspective un ensemble de dispositifs de transfert selon l'invention disposés entre un convoyeur linéaire de bacs à courrier vides et un système d'évacuation des bacs pleins.

La figure 2 montre schématiquement selon une vue de dessus en perspective l'ensemble de dispositifs de transfert de la figure 1 en position de transfert des bacs.

La figure 3 montre schématiquement selon une vue de dessus en perspective un dispositif de transfert selon l'invention en position basse escamotée.

La figure 4 montre schématiquement selon une vue de dessus en perspective un dispositif de transfert selon l'invention en position haute de transfert.

La figure 5 est une vue schématique en coupe d'un dispositif de transfert selon l'invention en position basse escamotée.

La figure 6 est une vue schématique en coupe d'un dispositif de transfert selon l'invention en position haute de transfert.

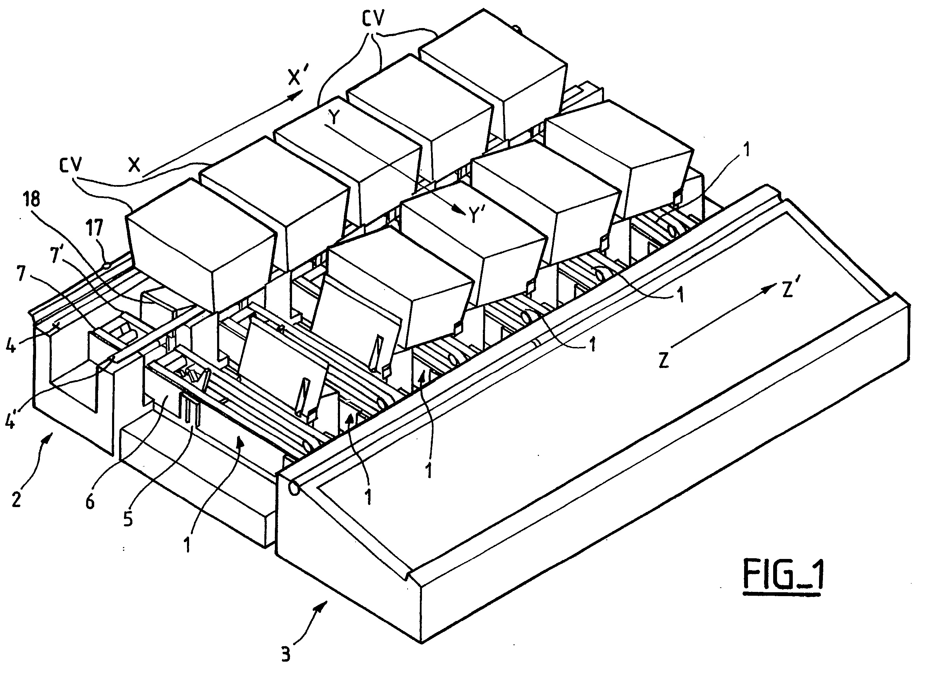

A la figure 1, plusieurs dispositifs de transfert 1 selon l'invention sont placés les uns à la suite des autres en des points de transfert entre un convoyeur 2 de bacs à courrier vides CV et un convoyeur 3 d'évacuation de bacs pleins, les dispositifs de tranfert 1 et les convoyeurs 2 et 3 faisant partie d'une machine de tri postal non représentée.

Le convoyeur 2 déplace les bacs vides CV à plat selon une direction de convoyage XX'. Le convoyeur 2 est ici un convoyeur comprenant deux bandes parallèles 4,4' motorisées.

Les bacs CV ont la forme d'un parallélépipède, reposent à plat sur les bandes du convoyeur 2 et ont leur face supérieure ouverte.

Le convoyeur 3 d'évacuation est également un convoyeur à bandes mais pourrait être de toute nature permettant d'évacuer des bacs à courrier pleins au fur et à mesure de leur arrivée à cet emplacement.

Chaque dispositif de transfert 1 comprend un bâti fixe 5 disposé sur un côté du convoyeur 2 et dans lequel est montée mobile une structure transporteuse 6 comprenant ici deux bandes de transport 7,7' parallèles motorisées qui s'étendent selon une direction de transfert YY' des bacs CV. La direction de transfert YY' est ici perpendiculaire à la direction de convoyage XX'.

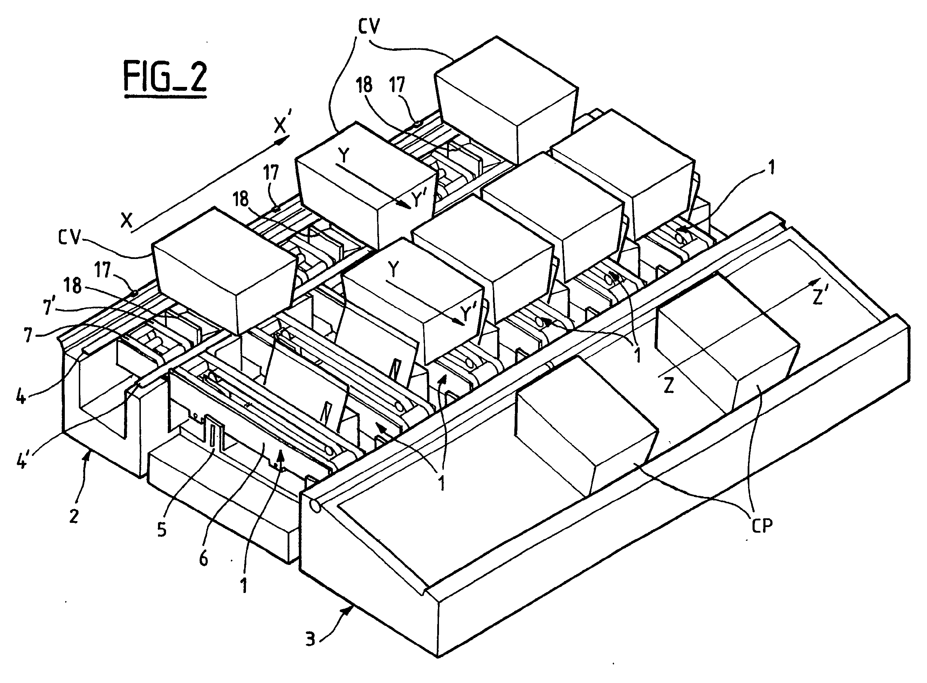

La structure transporteuse 6 d'un dispositif de transfert 1 croise le convoyeur 2 et s'étend selon la direction de transfert YY' sur le côté du convoyeur 2 où est posé le bâti 5. Comme visible sur les figures 1 et 2, les bandes motorisées 7,7' de la structure transporteuse 6 sont guidées pour former un plan de transport des bacs sensiblement horizontal en deux parties. Une des deux parties du plan de transport s'étend entre les bandes 4,4' du convoyeur 2 et l'autre partie s'étend sur le côté du convoyeur 2 où est posé le bâti 5.

La structure transporteuse 6 est montée dans le bâti 5 de telle manière à pouvoir être déplacée selon la direction verticale entre une position escamotée visible sur la figure 1 selon laquelle elle est disposée en dessous du convoyeur 2, notamment dans sa partie située entre les bandes 4,4' du convoyeur 2, et une position de transfert visible sur la figure 2 selon laquelle elle est disposée au-dessus du convoyeur 2. En position escamotée de la structure porteuse 6, les bacs vides CV peuvent circuler le long du convoyeur 2 pour être amenés aux différents points de transfert. En position de transfert, la structure transporteuse extrait un bac vide du convoyeur 2 en le soulevant et le transfère selon la direction YY' par-dessus les bandes 4,4' du convoyeur 2 pour l'amener à l'emplacement du bâti 5 où il pourra être chargé en courrier par déversement de plis depuis les godets d'un carrousel de la machine de tri postal circulant le long du convoyeur 2 au-dessus du bâti 5 des dispositifs de transfert.

Comme cela apparaît sur la figure 1, en position escamotée de la structure transporteuse 6, les bacs vides CV extraits du convoyeur 2 reposent sur le bâti 5 en position inclinée ce qui évite des pertes de courrier lors du chargement des bacs et améliore le rangement des courriers à l'intérieur des bacs.

Sur la figure 2, certains bacs à courrier pleins CP placés sur les structures transporteuses 6 des dispositifs de transfert 1 sont évacués à plat par le convoyeur d'évacuation 3 en même temps que des bacs vides CV extraits du convoyeur 2 par les dispositifs de transfert sont amenés à plat à l'emplacement des bâtis 5 pour être chargés en courrier. La direction d'évacuation ZZ' des bacs pleins CP est ici parallèle à la direction de convoyage XX' des bacs vides pour réduire l'encombrement au sol de l'installation.

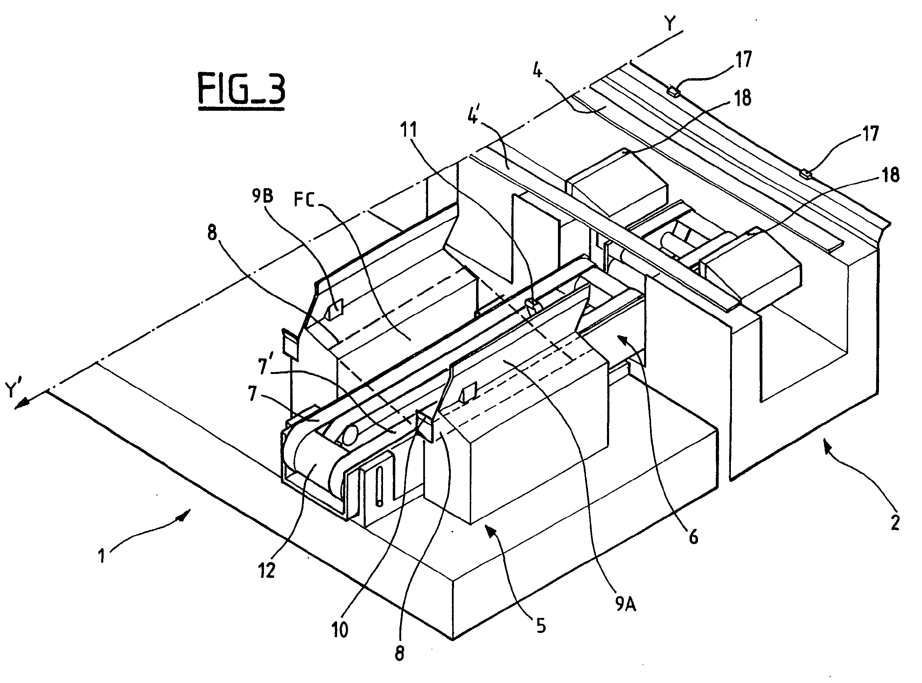

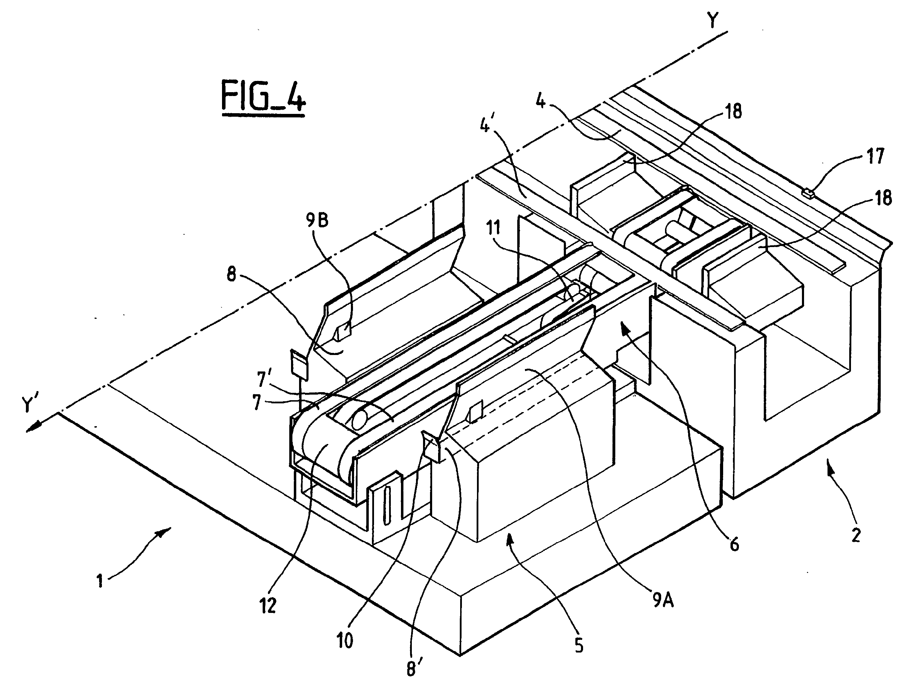

A la figure 3, on voit un dispositif de transfert 1 selon l'invention avec sa structure transporteuse 6 en position escamotée qui croise le convoyeur 2. Le bâti 5 du dispositif de transfert forme deux bordures 8,8' horizontales et sensiblement parallèles à la direction de transfert YY' entre lesquelles monte et descend la structure transporteuse 6. Ces deux bordures sont décalées selon la direction verticale de sorte qu'en position escamotée de la structure porteuse, le fond FS d'un bac à courrier repose sur les deux bordures en étant incliné par rapport au plan horizontal. Dans cette position escamotée, la structure transporteuse est bien entendu disposée en dessous des deux bordures 8,8' tandis qu'en position de transfert comme visible sur la figure 4, la structure transporteuse est disposée au-dessus des deux bordures 8,8'. L'angle d'inclinaison du bac reposant sur les bordures 8,8' est de l'ordre de 20°. Lorsque la structure transporteuse 6 est déplacée de sa position escamotée vers sa position de transfert, un bac plein reposant sur les deux bordures 8,8' en étant incliné est redressé en même temps qu'il est soulevé par la structure transporteuse 6 pour être transféré à plat vers le convoyeur d'évacuation 3.

Un volet incliné 9A est monté le long de la bordure 8' la plus basse pour guider le déplacement vertical d'un bac vide ou d'un bac plein lors du déplacement vertical de la structure transporteuse 6.

Le bâti 5 comporte une butée 10.disposée à une extrémité d'une bordure, ici la bordure la plus basse 8'. Un levier oscillant 11 est prévu dans la structure transporteuse 6 pour exercer sur un bac vide posé sur celle-ci un effort de poussée en direction de cette butée 10 lorsque la structure transporteuse est déplacée vers sa position escamotée de sorte que le bac vide en position inclinée se trouve positionné de façon précise.

Un capteur 9B pourra être prévu dans le volet 9A pour détecter un mauvais positionnement d'un bac vide sur les bordures 8,8'.

Sur la figure 4, le levier oscillant 11 est effacé dans la structure transporteuse 6 lorsque celle-ci est dans sa position de transfert pour permettre le déplacement d'un bac vide depuis le convoyeur 2 le long de la direction de transfert YY'. Ce levier oscillant 11, lorsqu'il est complètement érigé et en appui contre un bac pendant le déversement de plis comme visible sur la figure 3, a également pour fonction de maintenir le bac dans une position fixe même en présence de vibrations dues aux chocs des plis contre le bac.

La ou les bandes de transport de la structure 6 sont entraînées par une motorisation commune 12 qui est avantageusement disposée à une extrémité de la structure transporteuse 6 pour faciliter les opérations de maintenance.

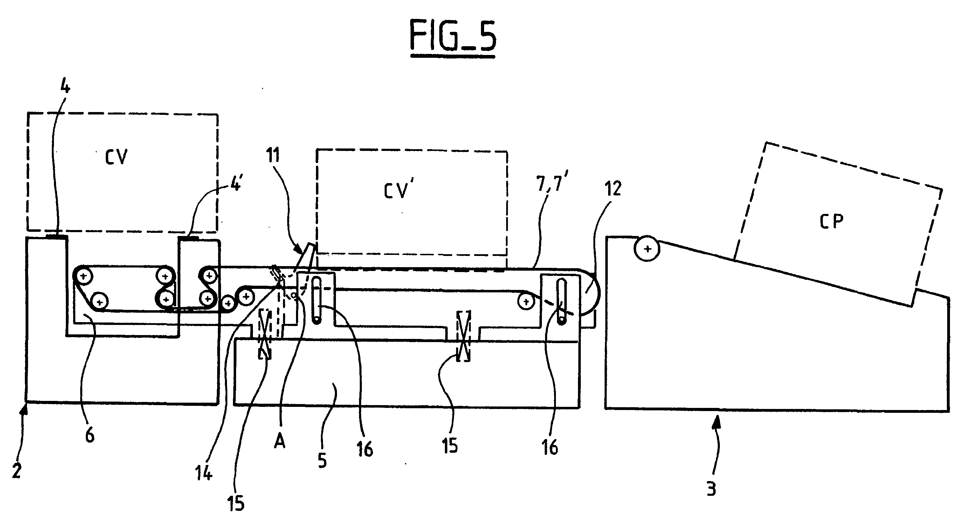

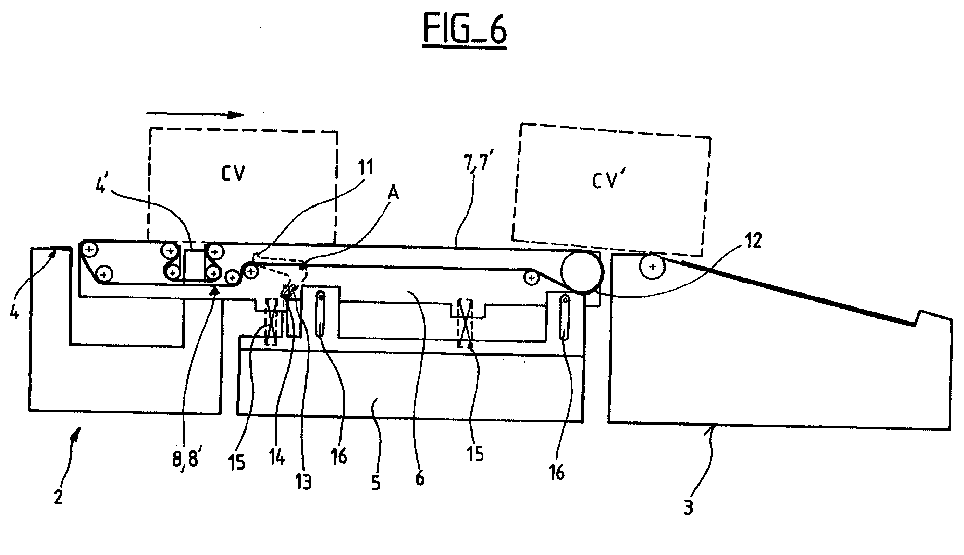

Les figures 5 et 6 montrent plus en détails de façon schématique selon une vue en coupe, le dispositif de transfert selon l'invention. A la figure 5, la structure transporteuse 6 est dans sa position escamotée et le levier oscillant 11 est érigé contre un bac. A la figure 6, la structure transporteuse 6 est dans sa position de transfert et le levier oscillant 11 est effacé à l'intérieur de la structure 6.

Le levier oscillant 11 est un levier coudé monté rotatif au niveau du coude autour d'un axe solidaire de la structure transporteuse. Il comporte une lumière 13 dans laquelle est déplacé un galet 14 monté à l'extrémité d'une patte fixée au bâti 5 de sorte que le mouvement de translation selon la direction verticale de la structure transporteuse 6 par rapport au bâti 5 est transformé en un mouvement angulaire du levier 11 dans la structure transporteuse.

Le système de déplacement pour élever ou abaisser la structure transporteuse 6 par rapport au bâti 5 peut être de toute nature, par exemple un jeu de cames motorisées 15 interposées entre la structure 6 et le bâti 5 combiné avec un guidage en translation 16 selon la direction verticale.

Sur la figure 5, un bac vide CV est posé sur les bandes 4,4' du convoyeur 2. Un bac en cour de chargement CV' est posé incliné sur le bâti 5 tandis qu'un bac plein CP est posé sur le convoyeur d'évacuation 3. Sur la figure 6, le bac vide CV repose sur les bandes 7,7' de la structure transporteuse et est transféré vers son emplacement de chargement tandis que le bac CV' qui a été rempli en courrier est transféré vers le convoyeur d'évacuation 3.

Les figures 5 et 6 montrent les poulies servant au guidage des bandes 7,7' de la structure transsporteuse 6 à l'intérieur du convoyeur 2. On distingue sur ces figures que les deux plans de transport formés par les bandes 7,7' sont séparés par un espace (déviation des bandes 7,7') pour éviter la bande 4' du convoyeur 2.

Comme visible sur les figures 1 à 4, un ensemble de capteurs 17 à faisceau lumineux sont prévus le long du convoyeur 2 aux points de transfert pour détecter la présence d'un bac vide sur le convoyeur 2 à chaque point de transfert et des butées mobiles 18 s'élèvent dans le convoyeur 2 pour bloquer le déplacement de chaque bac vide CV arrivé à un point de transfert. Sur les figures 1 et 4, les butées mobiles 18 s'élèvent au-dessus du convoyeur 2 ; elles bloquent le déplacement des bacs vides CV selon la direction de convoyage XX'. Sur les figures 2 et 3, les butées mobiles sont abaissées sous le convoyeur 2 ; les bacs vides CV peuvent circuler sur le convoyeur 2. En fonction des signaux délivrés par les capteurs 17, une unité de commande (non représentée) actionne les butées mobiles 18 de façon à garnir en bacs vides tous les points de transfert.

A partir d'une information indicative d'un état de remplissage d'un bac disposé incliné sur un bâti 5 d'un dispositif de transfert, l'unité de commande met en position de transfert la structure transporteuse 6 pour transférer ce bac plein vers le convoyeur d'évacuation 3 et pour extraire en même temps un bac vide du convoyeur 2 de façon à le transférer à l'emplacement de remplissage sur le bâti 5. L'unité de commande met ensuite la structure transporteuse 6 du dispositif de transfert en position escamotée de sorte que le bac vide placé l'emplacement de chargement se met en position inclinée et l'unité de commande actionne les butées mobiles 18 pour garnir avec un nouveau bac vide le point de transfert laissé libre sur le convoyeur 2.

Bien entendu, les organes de transport de la structure transporteuse 6 d'un dispositif de transfert 1 pourraient être constitués par des galets ou rouleaux motorisés sans sortir du cadre de l'invention.

Le dispositif de transfert selon l'invention peut être utilisé pour le transport d'objets divers tels que colis emballés ou non, valises, conteneurs, ... etc.

## Revendications

1. Dispositif de transfert pour convoyeur linéaire (2) comprenant un bâti fixe (5) disposé sur un côté du convoyeur linéaire, une structure transporteuse (6) d'objets montée mobile selon une direction sensiblement verticale dans ledit bâti (5) pour occuper une position de transfert selon laquelle la structure transporteuse est disposée au-dessus du convoyeur linéaire (2) ou une position escamotée selon laquelle la structure transporteuse est disposée en dessous du convoyeur linéaire (2), ladite structure transporteuse (6) croissant le convoyeur linéaire (2) et s'étendant suivant la direction de transfert sur le côté du convoyeur, **caractérisé en ce que** le bâti forme deux bordures (8,8') sensiblement parallèles et horizontales sur ledit côté du convoyeur entre lesquelles monte et descend la structure transporteuse (6), la structure transporteuse étant disposée en dessous des deux bordures lorsqu'elle occupe sa position escamotée et au-dessus des deux bordures lorsqu'elle occupe sa position de transfert, et **en ce que** les deux bordures sont décalées selon la direction verticale de sorte qu'un objet placé sur la structure transporteuse repose sur les deux bordures en étant incliné lorsque la structure transporteuse est dans sa position escamotée.

2. Dispositif de transfert selon la revendication 1, dans lequel le bâti (5) comporte une butée (10) disposée à une extrémité d'une bordure (8') et dans lequel un levier oscillant (11) est prévu pour exercer sur un objet posé sur la structure transporteuse un effort de poussée en direction de ladite butée quand la structure transporteuse est déplacée de sa position de transfert vers sa position escamotée.

3. Dispositif de transfert selon la revendication 2, dans lequel le mouvement angulaire dudit levier (11) est lié au mouvement de translation de la structure transporteuse (6) selon la direction verticale.

4. Dispositif de transfert selon la revendication 3, dans lequel ledit levier (11) est monté oscillant sur la structure transporteuse (6) et comporte une lumière (13) dans laquelle est déplacé un galet (14) monté sur le bâti.

5. Dispositif de transfert selon l'une des revendications précédentes pour un convoyeur linéaire ayant deux bandes parallèles motorisées (4,4'), dans lequel la structure transporteuse comporte une ou plusieurs bandes motorisées (7,7') servant au transfert des objets selon ladite direction de transfert, la ou les dites bandes motorisées (7,7') de la structure transporteuse étant guidées dans la structure transporteuse pour former un plan de transport sensiblement horizontal en deux parties, l'une des deux parties s'étendant entre les deux bandes du convoyeur linéaire et l'autre partie s'étendant sur ledit côté du convoyeur linéaire.

6. Dispositif de transfert selon la revendication 5, dans lequel lesdites bandes (7,7') de la structure transporteuse sont entraînées par une motorisation commune (12) disposée dans la structure transporteuse.

7. Convoyeur linéaire comprenant un dispositif de transfert selon l'une des revendications 1 à 6.

8. Machine de tri postal comprenant un ou plusieurs convoyeurs linéaires selon la revendication 7 pour la manipulation automatique de bacs à courrier.

9. Procédé pour le transfert d'un bac à courrier vide depuis un convoyeur linéaire (2) vers un bâti fixe (5) de chargement placé sur le côté du convoyeur linéaire et d'un bac à courrier plein depuis le bâti fixe (5) vers un convoyeur d'évacuation (3), utilisant un dispositif de transfert selon l'une des revendications 1 à 6, **caractérisé en ce qu'**il consiste dans les étapes suivantes :
- on élève une structure transporteuse (2) dans le bâti fixe, cette structure transporteuse croisant le convoyeur linéaire, pour déplacer à plat le bac plein vers le convoyeur d'évacuation et le bac vide au-dessus du bâti,
- on abaisse ensuite la structure transporteuse (2) entre deux bordures (8,8') du bâti qui sont décalées l'une par raapport à l'autre selon la direction verticale pour placer le bac vide dans une position inclinée de chargement.

## Patentansprüche

1. Transfervorrichtung für einen linearen Förderer (2), umfassend
einen feststehenden Rahmen (5), der auf einer Seite des linearen Förderers angeordnet ist,
eine Transportstruktur (6) für Gegenstände, die entlang einer im wesentlichen senkrechten Richtung beweglich in dem Rahmen (5) montiert ist, um eine Transfer-Stellung einzunehmen, bei der die Transportstruktur oberhalb des linearen Förderers (2) angeordnet ist, oder eine eskamotierte Stellung, bei der die Transportstruktur unter dem linearen Förderer (2) angeordnet ist,
wobei die Transportstruktur (6) den linearen Förderer (2) kreuzt und sich entlang der Transfer-Richtung auf der Seite des Förderers erstreckt,
**dadurch gekennzeichnet,**
**daß** der Rahmen zwei im wesentlichen parallele und horizontale Kanten (8, 8') auf der Seite des Förderers bildet, zwischen denen die Transportstruktur (6) aufsteigt und absteigt, wobei die Transportstruktur unterhalb der zwei Kanten angeordnet ist, wenn sie ihre eskamotierte Stellung einnimmt, und oberhalb der zwei Kanten, wenn sie ihre Transfer-Stellung einnimmt, und
**daß** die zwei Kanten in der vertikalen Richtung derart versetzt sind, daß ein auf die Transportstruktur plazierter Gegenstand auf den zwei Kanten ruht, wobei er geneigt ist, wenn die Transportstruktur in der eskamotierten Stellung ist.

2. Transfervorrichtung nach Anspruch 1, bei der der Rahmen (5) einen Anschlag (10) aufweist, der an einem Ende der einen Kante (8') angeordnet ist, und bei der ein oszillierender Hebel (11) vorgesehen ist, um auf einen auf der Transportstruktur abgelegten Gegenstand eine Schubeinwirkung in Richtung des Anschlags auszuüben, wenn die Transportstruktur aus ihrer Transfer-Stellung zu der eskamotierten Stellung verschoben ist.

3. Transfervorrichtung nach Anspruch 2, bei der die Winkelbewegung des Hebels (11) mit der Translationsbewegung der Transportstruktur (6) in der senkrechten Richtung gekoppelt ist.

4. Transfervorrichtung nach Anspruch 3, bei der der schwenkbare Hebel (11) auf der Transportstruktur (6) montiert ist und eine Öffnung (13) aufweist, in der eine auf dem Rahmen montierte Rolle (14) verschoben wird.

5. Transfervorrichtung nach einem der vorhergehenden Ansprüche für einen linearen Förderer, der zwei motor-getriebene parallele Bänder (4, 4') aufweist, wobei die Transportstruktur ein oder mehrere motor-getriebene Bänder (7, 7') aufweist, die dem Transfer der Gegenstände in die Richtung des Transfers dienen, wobei das oder die motorgetriebenen Bänder (7, 7') der Transportstruktur in der Transportstruktur geführt sind, um eine im wesentlichen horizontale Förderebene mit zwei Teilen auszubilden, wobei einer der zwei Teile sich zwischen den zwei Bändern des linearen Förderers erstreckt und der andere Teil sich auf der Seite des linearen Förderers erstreckt.

6. Transfervorrichtung nach Anspruch 5, bei der die Bänder (7, 7') der Transportstruktur durch eine gemeinsame Motorisierung (12) angetrieben sind, die in der Transportstruktur angeordnet ist

7. Linearer Förderer, umfassend eine Transfervorrichtung nach einem der Ansprüche 1 bis 6.

8. Maschine zum Sortieren von Post, umfassend einen oder mehrere lineare Förderer nach Anspruch 7 zur automatischen Handhabung von Behältnissen für Postgut.

9. Verfahren für den Transfer eines leeren Behältnisses für Postgut von einem linearen Förderer (2) zu einem feststehenden Rahmen (5) zum Befüllen, der an der Seite des linearen Förderers plaziert ist, und eines gefüllten Behältnisses für Postgut von dem feststehenden Rahmen (5) zu einem Entleerungs-Förderer (3), unter Verwendung einer TransferVorrichtung nach einem der Ansprüche 1 bis 6, wobei das Verfahren die folgenden Schritte umfaßt:
man hebt eine den linearen Förderer kreuzende Transportstruktur (6) in dem feststehenden Rahmen an, um das gefüllte Behältnis zu dem Entleerungs-Förderer und das leere Behältnis flach unter den Rahmen zu verschieben,
man senkt danach die Transportstruktur (6) zwischen zwei Kanten (8, 8') des Rahmens ab, die zueinander in der senkrechten Richtung versetzt sind, um das leere Behältnis in eine geneigte Stellung zum Befüllen zu plazieren.

## Claims

1. A transfer device for a linear conveyor (2) comprising a fixed framework (5) placed on one side of the linear conveyor, an object transporter structure (6) mounted in said framework (5) to move in a substantially vertical direction in order to occupy a transfer position in which the transporter structure is disposed above the linear conveyor (2) or a retracted position in which the transporter structure is disposed below the linear conveyor (2), said transporter structure extending across the linear conveyor (2) and in the transfer direction on one side of the conveyor, **characterized in that** said framework forms two substantially parallel and horizontal margins (8, 8') on said side of the conveyor, between which the transporter structure (6) can be raised and lowered, the transporter structure being disposed below the two margins when it occupies its retracted position, and above the two margins when it occupies its transfer position, and **in that** the two margins are offset in the vertical direction so that an object placed on the transporter structure rests on the two margins so that it is tilted when the transporter structure is in its retracted position.

2. A transfer device according to claim 1, in which the framework (5) is provided with an abutment (10) disposed at one end of a margin (8'), and in which a pivotally-mounted lever (11) is provided to exert a thrust force on the transporter structure towards said abutment when the transporter structure is moved from its transfer position to its retracted position.

3. A transfer device according to claim 2, in which the angular movement of said lever (11) is associated with the movement in translation of the transporter structure (6) in the vertical direction.

4. A transfer device according to claim 3, in which said lever (11) is mounted to pivot on the transporter structure (6) and is provided with a slot (13) in which a wheel (14) mounted on the frame is mounted to move.

5. A transfer device according to any preceding claims, for a linear conveyor having two motor-driven parallel belts (4, 4'), in which the transporter structure is provided with one or more motor-driven belts (7, 7') serving to transfer objects in said transfer direction, the one or more motor-driven belts (7, 7') of the transporter structure being guided in the transporter structure to form a substantially horizontal transport surface in two portions, one of the two portions extending between the two belts of the linear conveyor, and the other portion extending on said side of the linear conveyor.

6. A transfer device according to claim 5, in which said belts (7, 7') of the transporter structure are driven by a common motor (12) disposed in the transporter structure.

7. A linear conveyor including a transfer device according to any one of claims 1 to 6.

8. A postal sorting machine including one or more linear conveyors according to claim 7 for automatically handling mail bins.

9. A method for transferring an empty mail bin from a linear conveyor (2) towards a fixed framework (5) placed on one side of the linear conveyor and for transferring a full mail bin from the fixed framework (5) towards a removal conveyor (3), using a transfer device according to any one of claims 1 to 6, **characterized in that** said method comprises the steps of:
- raising a transporter structure (6) within the fixed framework, said transporter structure extending across said linear conveyor, for moving flat the full bin towards the removal conveyor and for moving flat the empty bin above the framework;
- lowering then the transporter structure (6) between two margins (8,8') of the framework which are offset in the vertical direction for placing the empty bin in a tilted position for its loading.
